# EUROPEAN PATENT SPECIFICATION

(11) **EP 4 426 159 B1**
(45) Date of publication and mention of the grant of the patent: **01.07.2026**
(21) Application number: 23733617.7
(22) Date of filing: 22.05.2023
(51) Int. Cl.: A44B 1/00, A44B 1/04, A44C 1/00, B29D 19/00, D06P 1/00, D06P 3/60, D01C 1/02

(54) **CELLULOSE ACCESSORIES WHICH CAN BE DYED DIRECTLY ON THE CLOTHING OR SEPARATELY**
DIREKT ODER GETRENNT FÄRBBARES CELLULOSEZUBEHÖR
ACCESSOIRES EN CELLULOSE POUVANT ÊTRE TEINTS DIRECTEMENT OU SÉPARÉMENT SUR LES VÊTEMENTS

(30) Priority: 27.05.2022 IT 202200011228
(43) Date of publication of application: 11.09.2024
(73) Proprietor: Bottonificio Lariano Srl, 22073 Fino Mornasco (IT)
(72) Inventor: ZANINI, Battista, 22073 Fino Mornasco (IT)
(74) Representative: Lecce, Giovanni
(86) International application number: PCT/EP2023/025235
(87) International publication number: WO 2023/227239

(56) References cited:
- EP-A2- 1 374 710
- WO-A1-96/11793
- GB-A- 1 483 792
- LAWAN SUPALAI ET AL: "Biomass Cane Bagasse: An Alternative Raw Material for Dissolving Pulp Production INTRODUCTION", JOURNAL OF TROPICAL FOREST RESEARCH JOURNAL OF TROPICAL FOREST RESEARCH, 1 January 2019 (2019-01-01), pages 29 - 43, XP093006105, Retrieved from the Internet <URL:https://www.jtfr.forestku.com/jn_file/7505022020V3No2_P3.pdf> [retrieved on 20221208]
- RAGHU DESHPANDE: "The initial phase of sodium sulfite pulping of softwood - a comparison of different pulping options", DOCTORAL THESIS FACULTY OF HEALTH, SCIENCE AND TECHNOLOGY, vol. 2016:43, 1 January 2016 (2016-01-01), Karlstad, pages i-xii, 1 - 82, XP055555628, ISSN: 1403-8099, ISBN: 978-91-7-063726-1

## Description

The invention relates to Cellulose accessories useful in the field of clothing and in particular to Cellulose accessories such as buttons of all kinds, as well as also jeans buttons, snap buttons, frogs, buckle, zippers, decorations, rings, labels and similar items, which can be dyed directly on the clothing or separately, characterized by a specific composition.

Several problems in clothing dyeing are known from the state of the art. This is because dyeing is not limited to the clothing item as such, but also to its accessories, which can be Cellulose accessories such as buttons of all kinds, as well as also jeans buttons, snap buttons, frogs, buckle, zippers, decorations, rings, labels and similar items. These accessories can be dyed or on the clothing or separately from the clothing.

Said problems of dyeing can be summarized as follows: higher production costs than dyeing the clothing as such, demand for personnel specifically trained in dyeing especially accessories, dedicated means of transportation, more man-hours spent, dilation of production costs and time for material preparation, handling of clothing to and from dyeing plants, repositioning of dyed garments for finishing with application of corresponding accessories.

In addition to these problems is the fact that clothing accessories as defined above, when the clothing is worn out, should be properly and easily disposed and thus have little or no pollution.

The accessories of clothing known in the art are often made of plastic, which creates environmental disposal problems.

GB 1 483 792 A discloses a process for the combined dyeing or printing and finishing of textile fabrics, no reference is made concerning dyeing clothing accessories. GB 1483792 A discloses a textile fabric suitable to be dyed directly on the clothing or separately, having the following composition: Cellulose ; Adhesive agent; Citric acid; Zinc Chloride; Water (humidity).

Lawan Supalai et al: "Biomass Cane Bagasse: An Alternative Raw Material for dissolving Pulp Production", Journal of Tropical Forest Research, 1 January 2019, pages 29-43 does not relate to the field of clothing accessories.

The purpose of the present invention is to overcome all the drawbacks and inconveniences discussed above of the known art. In particular, accessories such as buttons of all kinds, as well as also jeans buttons, snap buttons, frogs, buckle, zippers, decorations, rings, labels and similar items, have been found to surprisingly overcome all the above drawbacks and inconveniences.

The invention is set out in the appended set of claims.

A clothing accessory according to the present invention is chosen from the group that includes at least one of all types of buttons, such as also a jeans button, a snap button, a frog, a decoration, a ring, a label, and a similar item.

"Cellulose" according to the present invention may typically be alpha Cellulose.

The at least one Pigment according to the present invention may be chosen from Titanium Dioxide or Magnesium Silicate or a combination thereof, preferably a combination thereof.

The Adhesive agent according to the present invention may preferably be Melamine Resin-based and contain Formaldehyde. Citric acid acts as a curing agent.

The advantageous features of the accessories of the present invention consist in the fact that said accessories can be dyed at the same time with the clothing or separately from it, ensuring perfectly uniform colorations in type, shade, intensity, texture and durability.

According to the invention, the clothing accessory suitable to be dyed directly on the clothing or separately is characterized by the following composition:
* Cellulose 87-92%;
* at least one Pigment 0.1-0.5%;
* Adhesive agent 3.5-4.5%;
* Citric acid 0.05-0.2%;
* Zinc Chloride 0.05-0.4%;
* Water (humidity) 3-8%.
where all percentages of the components of the present composition above or below are expressed by weight relative to the total composition according to the present invention.

In a particularly preferred aspect of the invention, the clothing accessory suitable to be dyed directly on the clothing or separately is characterized by the following composition:
* alpha Cellulose 91%;
* at least one Pigment 0.2%;
* Adhesive agent 4%;
* Citric acid 0.05%;
* Zinc Chloride 0.05;
* Water (humidity) 4.7%.

The accessory of the present invention is characterized by the fact that the physical characteristics of the pressed Cellulose pulp slabs from which the accessory is obtained are specific properties and are the object of the present invention.

In particular, an object of the invention is the accessory as defined above where a pressed Cellulose pulp slab, from which the accessory is obtained, has a density between 1.1 and 1.4 g/cm³. Also, an object of the invention is the accessory as defined above where a pressed Cellulose pulp slab, from which the accessory is obtained, has a water absorption of between 5% and 18%.

Also, an object of the invention is the accessory as defined above where a pressed Cellulose pulp slab, from which the accessory is obtained, has a moisture coefficient between 4% and 8%.

Also, an object of the invention is the accessory as defined above where a pressed Cellulose pulp slab, from which the accessory is obtained, has compressive strength between 17 and 26 KgF/mm².

Also, an object of the invention is the accessory as defined above where a pressed Cellulose pulp slab, from which the accessory is obtained, has flexural strength between 15 and 20 Jgf mm².

Also, an object of the invention is the accessory as defined above where a pressed Cellulose pulp slab, from which the accessory is obtained, has impact resistance between 34 and 45 KgFcm/cm.

Also, an object of the invention is the accessory as defined above where a pressed Cellulose pulp slab, from which the accessory is obtained, has elastic modulus strength 5 X 10.4 KgFcm².

Also, an object of the invention is the accessory as defined above where a pressed Cellulose pulp slab, from which the accessory is obtained, has hardness between 80 and 110 Rockwell.

The method of producing the accessories of the present invention may be a method of known art.

The following example illustrates the invention.

Cellulose pulp is pressed at about 2000÷2700 kg/cm² depending on the thickness of the slab to be produced, which will have to ensure proper strength and workability in the production process from the accessory.

Cellulose pulp slabs (a white fibrous polysaccharide component of the cellular part of plants) are subjected to a cleaning treatment by which the natural wastes previously contained are removed.

These treatments allow for maximum purity of the material.

One of the cleaning treatments is as follows:
the plant fiber pulp slabs are immersed in a bath consisting of water at pH 5.5÷9 in a ratio of 1/5÷1/10 to which a detergent is added in a ratio of 3÷8 cc/L of water, all at a temperature of 40÷60°C for a variable time of about 0.5÷1.5 hours, after which it is rinsed in motion at about 70÷100°C for a variable time of about 5÷15 minutes within a water-based solution to which detergent is added in a ratio of 3÷9 g/L water, rinsing afterwards with water only.

By laser cutting, semi-finished products of the required dimensions are obtained; subsequent turning and/or machining will transform them into accessories of the required shapes and sizes.

The accessories thus obtained are finished with a final treatment composed as follows:
➢ an aqueous solution bath with about 10 cc/L caustic soda, a baumè of 30÷45° for about 1.5÷3.0 hours;
➢ a hot rinse;
➢ a neutralizing treatment for a time of about 30 minutes, with 10 cc/L glacial acetic acid at 50°C;
➢ a hot rinse again;
➢ a cold rinse with centrifugation;
➢ drying in a ventilated oven.

Upon completion of the above treatment, the clothing accessories of the present invention, processed from fully purified Cellulose pulp, are white or white/ivory.

On the raw clothes the corresponding Cellulose accessories obtained by the above procedure can be sewn or applied, thus obtaining similar and homogeneous fabric-accessories combinations that can be subjected to simultaneous dyeing in the same baths with the same procedures, sequences and treatment times that have been adopted so far for fabrics without accessories. The dyes obtained on the accessories with any dye bath or monochromatic dye, can be perfectly identical to those obtained on the fabrics on which the accessories are to be applied. Alternatively, the accessories can be dyed separately with any suitable dye.

## Claims

1. Clothing accessory suitable to be dyed directly on the clothing or separately, **characterized by** the following composition:
* Cellulose 87-92%;
* at least one Pigment 0.1-0.5%;
* Adhesive agent 3.5-4.5%;
* Citric acid 0.05-0.2%;
* Zinc Chloride 0.05-0.4%;
* Water (humidity) 3-8%;
where all percentages of the components of the present composition above are expressed by weight relative to the total composition.

2. Accessory according to claim 1, chosen from the group that includes at least one of all types of buttons, such as also a jeans button, a snap button, a frog, a decoration, a ring, a label, and a similar item.

3. Accessory according to claim 1 or 2, where Cellulose is Cellulose alpha.

4. Accessory according to claim 1, 2 or 3, where the at least one Pigment is chosen from Titanium Dioxide or Magnesium Silicate or a combination thereof, preferably a combination thereof.

5. Accessory according to claims 1-4, where the Adhesive agent is Melamine Resin-based and contains Formaldehyde.

6. Accessory according to claim 1 for clothing suitable to be dyed directly on the clothing or separately, **characterized by** the following composition:
* alpha Cellulose 91%;
* at least one Pigment 0.2%;
* Adhesive agent 4%;
* Citric acid 0.05%;
* Zinc Chloride 0.05;
* Water (humidity) 4.7%; where all percentages of the components of the present composition above are expressed by weight relative to the total composition.

## Patentansprüche

1. Kleidungszubehör, das direkt auf der Kleidung oder separat gefärbt werden kann, **gekennzeichnet durch** die folgende Zusammensetzung:
- Zellulose 87-92%;
- mindestens ein Pigment 0.1-0.5%;
- Klebemittel 3.5-4.5%;
- Zitronensäure 0.05-0.2%;
- Zinkchlorid 0.05-0.4%;
- Wasser (Feuchtigkeit) 3-8%;
wobei alle Prozentsätze der oben genannten Bestandteile der vorliegenden Zusammensetzung als Gewichtsanteile bezogen auf die Gesamtzusammensetzung angegeben sind.

2. Zubehör nach Anspruch 1, ausgewählt aus der Gruppe, die mindestens eine aller Arten von Knöpfen umfasst, wie einen Jeansknopf, einen Druckknopf, einen Froschknopf, eine Verzierung, einen Ring, ein Etikett und Ähnliches.

3. Zubehör nach Anspruch 1 oder 2, wobei die Cellulose Alpha-Cellulose ist.

4. Zubehörteil nach Anspruch 1, 2 oder 3, wobei das mindestens eine Pigment ausgewählt ist aus Titandioxid oder Magnesiumsilikat oder einer Kombination davon, vorzugsweise einer Kombination davon.

5. Zubehör nach einem der Ansprüche 1 bis 4, wobei das Klebemittel auf Melaminharzbasis hergestellt ist und Formaldehyd enthält.

6. Zubehör nach Anspruch 1 für Kleidung, das direkt auf der Kleidung oder separat gefärbt werden kann, **gekennzeichnet durch** die folgende Zusammensetzung:
- Alpha-Zellulose 91%;
- Mindestens ein Pigment 0,2 %;
- Klebemittel 4%;
- Zitronensäure 0,05%;
- Zinkchlorid 0,05; * Wasser (Feuchtigkeit) 4,7%
wobei alle Prozentsätze der oben genannten Bestandteile der vorliegenden Zusammensetzung als Gewichtsanteile bezogen auf die Gesamtzusammensetzung angegeben sind.

## Revendications

1. Accessoire vestimentaire approprié pour être teint directement sur le vêtement ou séparément, **caractérisé par** la composition suivante :
* de la cellulose de 87 à 92 % ;
* au moins un pigment de 0,1 à 0,5 % ;
* un agent adhésif de 3,5 à 4,5 % ;
* de l'acide citrique de 0,05 à 0,2 % ;
* du chlorure de zinc de 0,05 à 0,4 % ;
* de l'eau (humidité) de 3 à 8 % ;
où tous les pourcentages des constituants de la présente composition ci-dessus sont exprimés en poids par rapport à la composition totale.

2. Accessoire selon la revendication 1, choisi parmi le groupe qui inclut au moins l'un parmi tous les types de boutons, tel qu'également un bouton de jean, un bouton-pression, un brandebourg, une décoration, un anneau, une étiquette et un article similaire.

3. Accessoire selon la revendication 1 ou 2, dans lequel la cellulose est la cellulose alpha.

4. Accessoire selon la revendication 1, 2 ou 3, dans lequel l'au moins un pigment est choisi parmi le dioxyde de titane ou le silicate de magnésium ou une combinaison de ceux-ci, de préférence une combinaison de ceux-ci.

5. Accessoire selon les revendications 1 à 4, dans lequel l'agent adhésif est à base de résine mélamine et contient du formaldéhyde.

6. Accessoire selon la revendication 1 pour un vêtement, approprié pour être teint directement sur le vêtement ou séparément, **caractérisé par** la composition suivante :
* de l'alpha cellulose à 91 % ;
* au moins un pigment à 0,2 % ;
* un agent adhésif à 4 % ;
* de l'acide citrique à 0,05 % ;
* du chlorure de zinc à 0,05 % ;
* de l'eau (humidité) à 4,7 % ;
où tous les pourcentages des constituants de la présente composition ci-dessus sont exprimés en poids par rapport à la composition totale.
